# EUROPEAN PATENT SPECIFICATION

(11) **EP 2 988 396 B1**
(45) Date of publication and mention of the grant of the patent: **31.05.2017**
(21) Application number: 15181759.0
(22) Date of filing: 20.08.2015
(51) Int. Cl.: H02K 5/22, H02K 5/00, H02K 5/06

(54) **SYSTEM FOR FASTENING ATTACHMENT ELEMENTS TO AN ELECTRICAL MACHINE HOUSING**
SYSTEM ZUR BEFESTIGUNG VON ANBAUELEMENTEN AN EIN ELEKTRISCHES MASCHINENGEHÄUSE
SYSTÈME D'ATTACHE D'ÉLÉMENTS DE FIXATION POUR UN BOÎTIER DE MACHINE ÉLECTRIQUE

(30) Priority: 22.08.2014 US 201462040666 P
(43) Date of publication of application: 24.02.2016
(73) Proprietor: Weg Equipamentos Electricos S.A., 89256-900 Jaragua do Sul - SC (BR)
(72) Inventor: DOS SANTOS, José Roberto, Jaraguá do Sul, Santa Catarina (BR); ZOZ, Dilson Pedro, Jaraguá do Sul, Santa Catarina (BR)
(74) Representative: Cabinet Plasseraud

(56) References cited:
- DE-A1-102010 010 786
- GB-A- 1 248 957
- GB-A- 2 334 827
- JP-A- 2013 126 275

## Description

### FIELD OF INVENTION

The present invention refers to a fastening system for fastening attachment elements to electrical machines and, more specifically, to a system for fastening feet or pad-mounted elements to the housing of electrical machines.

### BACKGROUND OF THE INVENTION

Several different types of electrical machine housings are known in the prior art and basically comprise a frame in which parts and components of the machine are housed.

The housings comprise support or attachment devices for connecting and stabilizing the housing to surfaces, such as bases or even other machines. Such support devices are commonly named "feet".

A known type of fastening system is used in electrical machines with multi-mounting features. Multi-mounting enables different positions for assembly, allowing configuration changes to be made without the need for machining or additional alterations. This type of solution offers flexibility and versatility to the machine.

The multi-mounting requires a feet system that enables its removal and installation, to achieve the flexibility of configuration change. It is, therefore, necessary that the machines with multi-mounting housings comprise removable feet.

In known machines, feet are attached to the housings through more than one screw, and such screws must be unscrewed to remove the feet. This type of solution presents some flexibility. However, it expends time and requires the use of extra parts (screws).

Some development efforts of more versatile bases and feet solutions are known from the state of the art.

Japanese document JP 3324015, for example, describes a motor housing having a fastening system comprised by a support inserted in grooves present in the housing. The grooves have sloped walls and the support has an L configuration with a horizontal portion and a fitting portion. After insertion of the support, a pin is used to fix by pressure into an opening of the engagement part, deforming it to fasten. The versatility is achieved by allowing the use of different types of feet (supports).

Another prior art solution is described in the Russian document RU 2123751. This document describes an electrical machine having slots for anchoring feet. Each foot is inserted into the machine slot and moves freely along the axis of the machine. Thus, the foot comprises a fitting portion and a support portion screwed into the base.

Japanese document JPH09247885 describes a motor with a support, which uses a structure and mounting legs. The structure is fixed to the stator by shrinkage fitting and the mounting legs are attached to the frame by a screw.

German document DE102009010718 describes a stator housing fastening device comprising a base portion and a fastening screw. The base portion has a mounting part having two bearing surfaces that correspond to a counter surface in a corresponding mounting portion of the stator housing. The fastening screw fastens the base portion to the housing in two different positions.

Chinese document CN 203554215 describes an aluminum motor housing having a base portion and a motor structure portion. The base portion has a receiving surface of the motor structure, stop sidewalls and a flat base, which is screwed on a support surface.

The above-mentioned documents show solutions with a certain flexibility degree to fasten connections and feet to machine housings. However, the need steel remains for an effective solution for fastening attachment elements to electrical machines, allowing easy removal and insertion of the components, providing / maintaining the versatility and flexibility.

### OBJECTS OF THE INVENTION

It is an object of the present invention to provide a system for fastening attachment elements to the housing of an electrical machine, which provides fastening versatility without causing high impact on the manufacturing and assembly process of the electrical machine.

It is another object of the present invention to provide a system for fastening attachment elements to the housing of an electrical machine, which ensures high strength, without causing high impact on the manufacturing and assembly process of the electrical machine.

### SUMMARY OF THE INVENTION

The present invention archives the above objects by means of a system for fastening attachment elements to the housing of an electrical machine, the housing comprising a substantially cylindrical central body defining a longitudinal geometric axis, and at least one external reception portion for an attachment element.

In system of the present invention, the reception portion comprises a longitudinal rail, forming a channel, and a longitudinal tubular wall extending adjacent to the rail, the longitudinal tubular wall having a longitudinal bore for receiving an axial translation limiting element. The axial translation limiting element aims to prevent the axial translation of the attachment element after the axial sliding engagement of the attachment element on the rail.

Preferably, the rail and the longitudinal tubular wall are integrally formed on the exterior surface of the housing.

In the preferred embodiments of the invention, the attachment element is a foot to be screwed to a desired site or equipment or a connection element for "pad mounted" connections.

Therefore, in the first embodiment of the present invention, the attachment element comprises a foot having a base from which protrudes a trestle structure formed by a first wall and a second wall, the second wall having a longitudinal guide ledge for axial sliding engagement on the rail and a passage opening for passage of the axial translation limiting element.

Thus, the axial translation limiting element is inserted through the passage opening of the attachment element and into the longitudinal bore of the tubular wall of the reception portion, after the sliding engagement between the guide ledge and the rail.

Preferably, the axial translation limiting element is a screw, and the rail comprises two spaced longitudinal walls forming a channel. The longitudinal walls extend until they meet an end wall, which delimits the end of the rail.

The foot may be formed by a single piece structure, and the base of the foot may have holes for receiving screws used to fix the housing to a desired base or equipment.

In the second embodiment of the present invention, the attachment element comprises a connection element having a connection wall with connecting engaging portions, a ledge wall whose edge is configured with a ledge guide for axial sliding engagement on the rail, and a hoop part, which includes the passage opening for passage of the axial translation limiting element.

The hoop part projects from the connection wall, such that the opening passage of the hoop part coincides with the longitudinal bore of the tubular wall of the reception portion. Therefore, after the engagement of the connection element on the rail, the axial translation limiting component is inserted through the passage opening and into the longitudinal bore of the tubular wall.

Preferably, the connection wall has a rectangular plate shape with a mechanical reinforcement rib extending longitudinally on the upper surface of the plate, between the connection engaging portions, and the ledge wall projects inferiorly and transversely from the connection wall.

### BRIEF DESCRIPTION OF THE DRAWINGS

The present invention will be described in more detail below, with references to the accompanying drawings, in which:
Figure 1 - is a perspective view of an electrical machine housing which incorporates the fastening system according to the present invention;
Figure 2 - is a detailed perspective frontal view of the fastening system according to a first embodiment of the present invention;
Figure 3 - is a detailed perspective rear view of the fastening system according to the first embodiment of the present invention;
Figure 4 - is a detailed view of the foot reception portion of the fastening system according to the first embodiment of the present invention;
Figure 5 - is a perspective view of the foot of the fastening system according to the first embodiment of the present invention;
Figure 6 - is a perspective view of the fastening system according to a second embodiment of the present invention;
Figure 7 - is a detailed view of the connection element reception portion of the fastening system according to the second embodiment of the present invention; and
Figure 8 - is a perspective view of the connection element of the fastening system according to the second embodiment of the present invention.

### DETAILED DESCRIPTION OF THE INVENTION

The present invention will be described below based on two representative embodiments of the fastening system of the present invention.

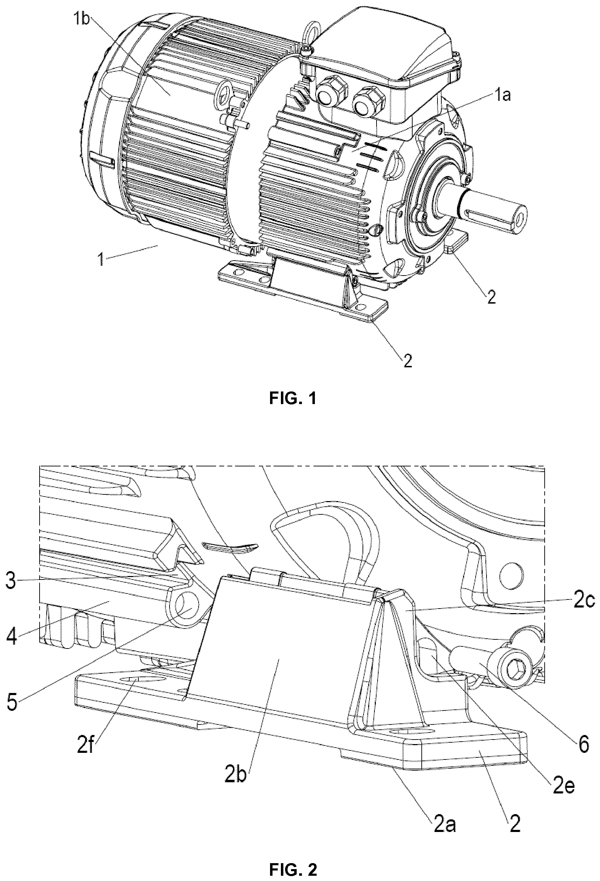

Figure 1 shows an electrical machine incorporating two fastening system embodiments of the present invention. In a first embodiment, incorporated on the bottom region of the housing, the fastening system comprises an attachment element or foot for fixing by screwing into a site or base equipment. In the second embodiment, incorporated on the top region of the housing, the attachment element is a connecting element of the pad-mounted type.

Although the present invention is depicted incorporated in an electric motor, it should be understood that the solution of the invention could also be applied to other electrical machines comprising a housing, for example, any rotating electric machine having such characteristics .

As shown in Figure 1, the electrical machine comprises a housing split in the axial direction 1, formed by a first housing part 1 a and a second housing part 1 b. Therefore, Figure 1 shows a machine with the housing parts slightly spaced apart. Naturally, for machine operation, the parts will be in coupled configuration.

It should be noted, however, that the present invention could be incorporated in electrical machines with housings having different constructive characteristics, for example, housings of the type comprising a main body with end caps.

As can be seen in Figure 1, a single housing can incorporate a number of fastening systems according to the present invention. In Figure 1, the bottom region of the housing has two fastening systems according to the first embodiment of the present invention and the top region of the housing has two systems according to the second embodiment of the present invention.

The fastening system of the present invention comprises a receiving portion which includes a rail 3, 30 formed directly in the housing and a longitudinal tubular wall 4, 40 extending longitudinally adjacent the rail.

The system further comprises an attachment element 2, 20 that axially and slidably engages the rail 3, 30. The attachment element may be a foot 2, which is screwed in a base or equipment, or a connection element 20 for a pad-mounted type connection.

Through the axial sliding engagement, the attachment element 2, 20 can be easily attached and removed from the housing. To prevent the axial translation of the attachment element 2, 20 after the axial sliding engagement on the rail 3, 30, the system of the present invention further comprises an axial translational limitation element 6, 60 that is configured for insertion into the tubular longitudinal wall 4, 40 after the engagement.

Figures 2 to 5 show, in detail, the first embodiment of the fastening system of the present invention.

In this embodiment, the attachment element is a foot 2 to be screwed in a site or equipment where it is desired to fasten the housing.

Preferably, two feet are fastened in a spaced apart relationship relative to one another. Thus, the outer surface of the first housing part 1 a has, near an end thereof, two receiving portions for receiving the feet 2. It should be noted, however, that the present invention contemplates the use of a greater number of feet, such as for example, four feet.

Each receiving portion includes a rail 3 formed directly on the housing. The rail 3 is formed by two spaced longitudinal walls 3a, 3b configuring a channel that constitutes the rail. In the preferred embodiment of the present invention, the walls 3a and 3b are inclined toward the inside of the channel so that the cross section forms a trapezoid without its top edge.

The longitudinal walls 3a and 3b extend until meeting an end wall 3c which delimits the end of the rail.

Each receiving portion further has, adjacent one of the spaced walls 3b, a tubular longitudinal wall 4 extending longitudinally adjacent the rail. As will be explained below, the tubular wall 4 comprises a longitudinal bore 5, which receives the axial translation limiting element.

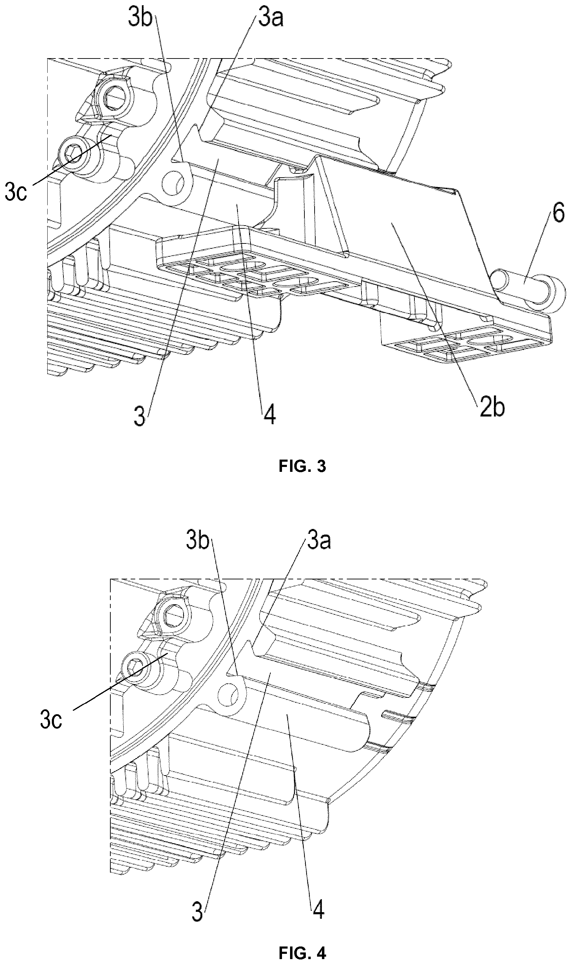

As can be seen more clearly in Figure 3, in the embodiment shown in the figures, the wall 3b is contiguous to the tubular longitudinal wall 4.

Furthermore, in the embodiment shown in the figures, the walls 3a, 3b that form the rail 3 and the tubular longitudinal wall 4 are integrally formed on the housing. Such integral formation can be achieved, for example, at the time of forming the housing or by welding.

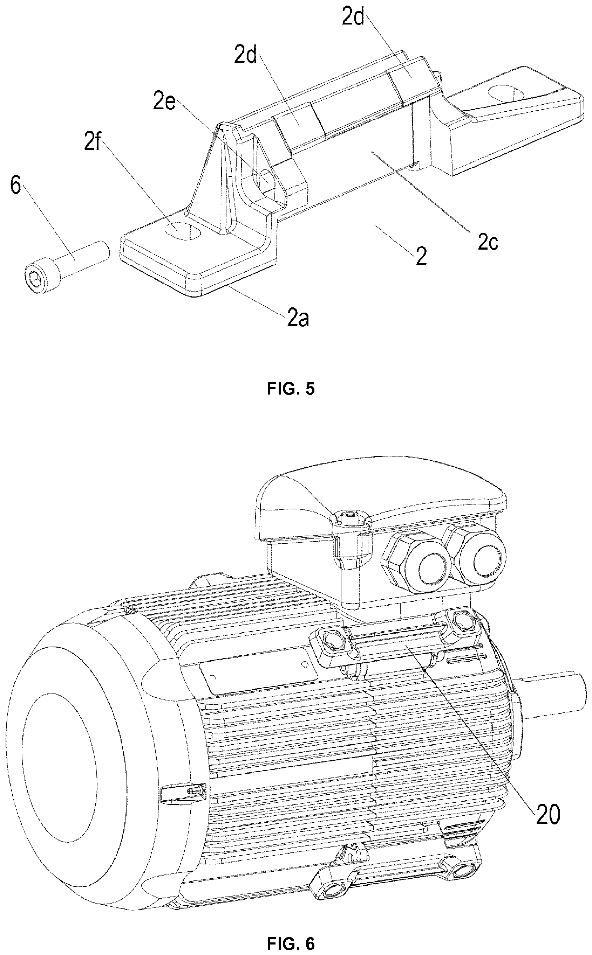

Each of the feet 2 is formed by a single piece structure which comprises a base 2a from which protrudes a trestle structure formed by a first wall 2b (see Figure 3) and a second wall 2c (see figure 5). A guide ledge 2d is formed near the upper edge of the second wall 2c. The guide ledge 2d axial is configured for axial sliding engagement on the rail 3.

As can be seen in Figure 5, the guide ledge 2d can be formed as a wall with two ledge portions 2d.

The second wall 2c further includes a passage opening 2e for the passage of the axial translation limiting element 6. As seen in Figure 5, the passage opening 2e may be formed in a wall portion, which protrudes from the wall 2c.

The axial translation limiting element 6 aims to prevent the axial translation of the feet after the axial sliding engagement of the guide ledge 2d with rail 3.

The distance in the vertical direction between the guide ledge 2d and the base 2a of foot 2 corresponds approximately to the distance in the vertical direction between the rail 3 and the most lower part of the housing, so that upon assembly of the foot to the housing, the base 2a may be fastened to the desired site or equipment.

Accordingly, in the embodiment shown in Figures 2 to 5, the base 2a has holes 2f for receiving screws used to fasten the housing to the desired site or equipment.

The assembly of the foot 2 on the housing 2 can be easily performed by axially sliding the guide ledge 2d into the channel formed between the longitudinal walls 3a and 3b and then inserting the axial translation limiting element 6 into the longitudinal bore 5 of tubular wall 4.

Figures 6 to 8 show, in greater detail, the second embodiment of the fastening system of the present invention.

In this embodiment, the fixing element is a connection element for an assembly type known as "pad mounted" or pedestal.

Preferably, two connection elements 20 are fastened in a spaced apart relationship with respect to one another. Thus, the top outer surface of the first housing part has, near one end thereof, two receiving portions for receiving the connection elements 20.

It should be noted, however, that the present invention contemplates the use of a greater number of connection elements 20 such as, for example four connection elements.

Each receiving portion includes a rail 30 formed directly on the housing. The rail 30 is formed by two spaced longitudinal walls 30a, 30b, configuring a channel that constitute the rail 30. The walls are upwardly bounded by a stop shoulder, which configures the rail 30.

Each receiving portion further has, adjacent one of the parallel walls 30b, a tubular longitudinal wall 40 which extends longitudinally adjacent to the rail. As will be explained below, the tubular wall 40 includes longitudinal bore 50 for receiving the axial translation limiting element 60.

In the embodiment shown in the figures, the walls 30a, 30b that form the rail 3 and the tubular longitudinal wall 40 are integrally formed on the housing. Such integral formation can be achieved, for example, at the time of forming the housing or by welding.

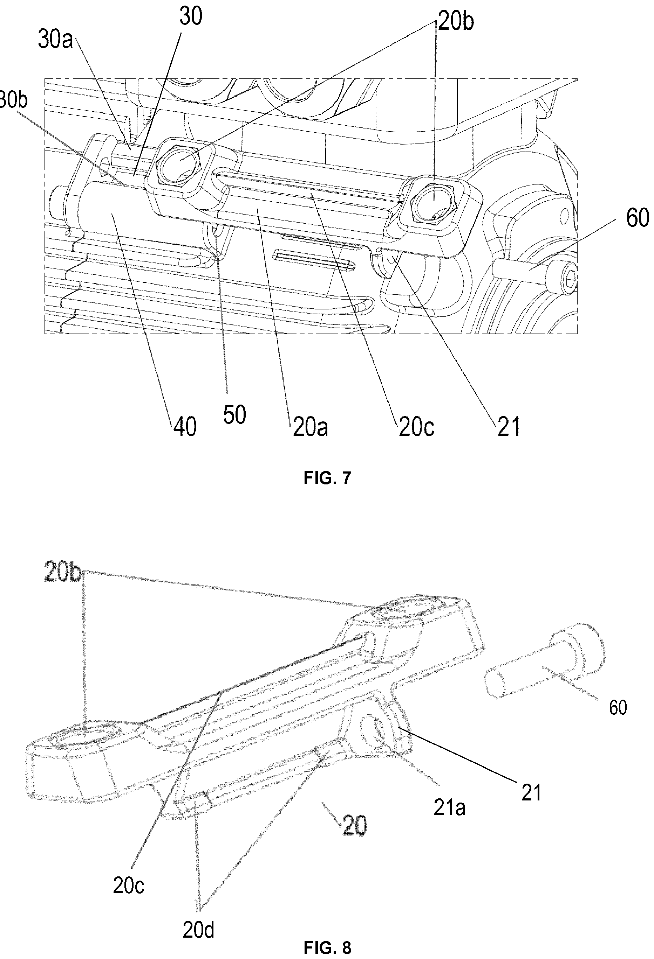

Moreover, as can be best seen in Figure 7, in the second embodiment of the invention, the parallel wall 30b and tubular longitudinal wall 40 are contiguously formed.

Each of the connection elements 20 comprises a connecting wall 20a whose upper surface includes connection engagement portions 20b for connecting to assembly fixtures of the "pad mounted" type. The connection elements 20 are often used for fastening the electrical machine to equipment or structures external to the housing, for example, for connecting rods that are installed in air ducts.

As shown in the figures, the connecting wall 20a preferably has a rectangular plate shape with a mechanical reinforcement rib 20c extending longitudinally on the upper surface of the plate, between the connection engaging portions 20b.

A ledge wall projects inferiorly from the connecting part 20a. The edge of the ledge wall is formed with a guide ledge 20d configured to axial sliding engagement on the rail 30. Preferably, the guide ledge is configured with two ledge portions 20d.

Thus, the connection element 20 can be attached and removed from the housing through axial sliding engagement between the guide ledge 20d and the rail 30.

The attachment element 20 further comprises hoop part 21 which projects from the connecting wall 20a, so that the passage opening 21 a of the hoop coincides with the longitudinal bore of the longitudinal tubular wall 40.

Thus, after the slidable axial engagement of the guide ledge 20d on the rail 30, the axial translation limiting element 60 can be inserted through the passage opening 21 a of the hoop 21 and into the longitudinal bore 50 of the tubular wall 40 in order to prevent axial translation between the connection element 20 and the rail 30.

In the embodiment of the invention shown in figures 6 to 8, the passage opening 21 a is a center hole 21 a on the hoop 21.

It should be noted that the receiving portion of the housing and the attachment elements of the fastening system of the present invention can be made of any material suitable to the application such as, for example, steel or iron.

Having described two exemplary embodiments of the fastening system of the present invention, it should be understood that the scope of the present invention encompasses other possible variations of the inventive concept described, being limited solely by the wording of the appended claims, including therein possible equivalents.

## Claims

1. System for fastening attachment elements to a housing of an electrical machine, the housing comprising a substantially cylindrical central body defining a longitudinal geometric axis, and comprising at least one external reception portion for an attachment element, wherein the reception portion comprises a longitudinal rail (3, 30) and the system also comprises an attachment element (2, 20) for axial sliding engagement on the rail (3, 30), **characterized in that** the reception portion comprises a longitudinal tubular wall (4, 40) extending adjacent to the rail (3,30), the tubular wall having a bore (5,50) for receiving an axial translation limiting element (6,60); the attachment element further comprising a passage opening (2e, 21a) for passage of an axial translation limiting element (6, 60); and the axial translation limiting element (6,60) being inserted through the passage opening (2e, 21 a) of the attachment element (2, 20) and into the bore (5, 50) of the tubular wall of the reception portion, after the sliding engagement between the attachment element (2, 20) and the rail (3,30).

2. System, according to claim 1, **characterized in that** the axial translation limiting element (6, 60) is a screw.

3. System, according to claim 1 or 2, **characterized in that** the rail (3, 30) comprises two spaced longitudinal walls (3a, 3b; 30a, 30b) forming a channel.

4. System, according to any of claims 1 to 3, **characterized in that** the rail (3, 30) and the longitudinal tubular wall (4, 40) are integrally formed on the exterior surface of the housing.

5. System, according to any of claims 1 to 4, **characterized in that** the attachment element (2) comprises a foot (2) having a base (2a) from which protrudes a trestle structure formed by a first wall (2b) and a second wall (2c), the second wall (2c) having a longitudinal guide ledge (2d), for axial sliding engagement on the rail (3), and the passage opening (2e) for passage of the axial translation limiting element (6).

6. System, according to claim 5, **characterized in that** the foot (2) is formed by a single piece structure, and the base (2a) of the foot has holes (2f) for fastening screws.

7. System, according to any of claims 1 to 4, **characterized in that** the attachment element (20) comprises a connection element (20) having a connection wall (20a) with connecting engaging portions (20b), and a ledge wall whose edge is configured with a ledge guide (20d) for axial sliding engagement on the rail (30), and a hoop part (21) with the passage opening (21 a) for passage of the axial translation limiting element (60).

8. System, according to claim 7, **characterized in that** the connection wall (20a) has a rectangular plate shape with a mechanical reinforcement rib (20c) extending longitudinally on the upper surface of the plate, between the connection engaging portions (20b).

9. System, according to claim 8, **characterized in that** the ledge wall projects inferiorly and transversely from the connection wall (20a).

10. System, according to claim 9, **characterized in that** the hoop part projects from the connection wall (20a).

## Patentansprüche

1. System zum Befestigen von Befestigungselementen an einem Gehäuse einer elektrischen Maschine, wobei das Gehäuse einen im Wesentlichen zylindrischen zentralen Körper, der eine geometrische Längsachse definiert, und mindestens einen äußeren Aufnahmeabschnitt für ein Befestigungselement aufweist, wobei der Aufnahmeabschnitt eine längliche Schiene (3, 30) aufweist, und wobei das System außerdem ein Befestigungselement (2, 20) für einen axialen Gleiteingriff auf der Schiene (3, 30) aufweist, **dadurch gekennzeichnet, dass**
der Aufnahmeabschnitt eine längliche rohrförmige Wand (4, 40) aufweist, die sich benachbart zur Schiene (3, 30) erstreckt, wobei die rohrförmige Wand eine Öffnung (5, 50) zum Aufnehmen eines Elements (6, 60) zum Begrenzen einer axialen Translationsbewegung aufweist;
wobei das Befestigungselement ferner eine Durchlassöffnung (2e, 21a) zum Hindurchführen eines Elements (6, 60) zum Begrenzen einer Translationsbewegung aufweist, und
wobei das Element (6, 60) zum Begrenzen einer axialen Translationsbewegung nach dem Gleiteingriff zwischen dem Befestigungselement (2, 20) und der Schiene (3, 30) durch die Durchlassöffnung (2e, 21a) des Befestigungselements (2, 20) und in die Öffnung (5, 50) der rohrförmigen Wand des Aufnahmeabschnitts eingesetzt wird.

2. System nach Anspruch 1, **dadurch gekennzeichnet, dass** das Element (6, 60) zum Begrenzen einer axialen Translationsbewegung eine Schraube ist.

3. System nach Anspruch 1 oder 2, **dadurch gekennzeichnet, dass** die Schiene (3, 30) zwei beabstandete längliche Wände (3a, 3b; 30a, 30b) aufweist, die einen Kanal bilden.

4. System nach einem der Ansprüche 1 bis 3, **dadurch gekennzeichnet, dass** die Schiene (3, 30) und die längliche rohrförmige Wand (4, 40) auf der Außenfläche des Gehäuses integral ausgebildet sind.

5. System nach einem der Ansprüche 1 bis 4, **dadurch gekennzeichnet, dass** das Befestigungselement (2) einen Fuß (2) mit einer Basis (2a) aufweist, von der sich eine durch eine erste Wand (2b) und eine zweite Wand (2c) gebildete Stützstruktur erstreckt, wobei die zweite Wand (2c) einen länglichen Führungsansatz (2d) für eine axiale Gleitbewegung auf der Schiene (3) und die Durchlassöffnung (2e) zum Hindurchführen des Elements (6) zum Begrenzen einer axialen Translationsbewegung aufweist.

6. System nach Anspruch 5, **dadurch gekennzeichnet, dass** der Fuß (2) durch eine einstückige Struktur gebildet wird und die Basis (2a) des Fußes Löcher (2f) für Befestigungsschrauben aufweist.

7. System nach einem der Ansprüche 1 bis 4, **dadurch gekennzeichnet, dass** das Befestigungselement (20) ein Verbindungselement (20) mit einer Verbindungswand (20a) mit Verbindungseingriffsabschnitten (20b) und einen Wandansatz aufweist, dessen Rand mit einem Führungsansatz (20d) für einen Gleiteingriff auf der Schiene (30) und einem Bügelabschnitt (21) mit der Durchlassöffnung (21) zum Hindurchführen des Elements (60) zum Begrenzen einer axialen Translationsbewegung konfiguriert ist.

8. System nach Anspruch 7, **dadurch gekennzeichnet, dass** die Verbindungswand (20a) die Form einer rechteckigen Platte mit einer mechanischen Verstärkungsrippe (20c) hat, die sich auf der oberen Fläche der Platte zwischen den Verbindungseingriffsabschnitten (20b) in Längsrichtung erstreckt.

9. System nach Anspruch 8, **dadurch gekennzeichnet, dass** der Wandansatz von der Verbindungswand (20a) nach innen und transversal hervorsteht.

10. System nach Anspruch 9, **dadurch gekennzeichnet, dass** der Bügelabschnitt von der Verbindungswand (20a) hervorsteht.

## Revendications

1. Système pour fixer des éléments d'attache à un boîtier d'une machine électrique, le boîtier comprenant un corps central sensiblement cylindrique définissant un axe géométrique longitudinal, et comprenant au moins une portion de réception externe pour un élément d'attache, dans lequel la portion de réception comprend un rail longitudinal (3, 30) et le système comprend également un élément d'attache (2, 20) pour une mise en prise par coulissement axial sur le rail (3, 30), **caractérisé en ce que** la portion de réception comprend une paroi tubulaire longitudinale (4, 40) s'étendant adjacente au rail (3, 30), la paroi tubulaire ayant un alésage (5, 50) pour recevoir un élément de limitation de translation axiale (6, 60) ; l'élément d'attache comprenant en outre une ouverture de passage (2e, 21a) pour le passage d'un élément de limitation de translation axiale (6, 60) ; et
l'élément de limitation de translation axiale (6, 60) étant inséré à travers l'ouverture de passage (2e, 21a) de l'élément d'attache (2, 20) et dans l'alésage (5, 50) de la paroi tubulaire de la portion de réception, après la mise en prise par coulissement entre l'élément d'attache (2, 20) et le rail (3, 30).

2. Système selon la revendication 1, **caractérisé en ce que** l'élément de limitation de translation axiale (6, 60) est une vis.

3. Système selon la revendication 1 ou 2, **caractérisé en ce que** le rail (3, 30) comprend deux parois longitudinales espacées (3a, 3b ; 30a, 30b) formant un canal.

4. Système selon l'une quelconque des revendications 1 à 3, **caractérisé en ce que** le rail (3, 30) et la paroi tubulaire longitudinale (4, 40) sont formés d'un seul tenant sur la surface extérieure du boîtier.

5. Système selon l'une quelconque des revendications 1 à 4, **caractérisé en ce que**
l'élément d'attache (2) comprend un pied (2) ayant une base (2a) à partir de laquelle fait saillie une structure en chevalet formée par une première paroi (2b) et une seconde paroi (2c), la seconde paroi (2c) ayant un rebord de guidage longitudinal (2d), pour une mise en prise par coulissement axial sur le rail (3), et l'ouverture de passage (2e) pour le passage de l'élément de limitation de translation axiale (6).

6. Système selon la revendication 5, **caractérisé en ce que** le pied (2) est formé par une structure d'une seule pièce, et la base (2a) du pied comporte des trous (2f) pour fixer des vis.

7. Système selon l'une quelconque des revendications 1 à 4, **caractérisé en ce que**
l'élément d'attache (20) comprend un élément de raccordement (20) ayant une paroi de raccordement (20a) avec des portions de mise en prise par raccordement (20b), et une paroi de rebord dont le bord est configuré avec un guide de rebord (20b) pour une mise en prise par coulissement axial sur le rail (30), et une partie en arceau (21) avec l'ouverture de passage (21a) pour le passage de l'élément de limitation de translation axiale (60).

8. Système selon la revendication 7, **caractérisé en ce que** la paroi de raccordement (20a) a une forme de plaque rectangulaire avec une nervure de renforcement mécanique (20c) s'étendant longitudinalement sur la surface supérieure de la plaque, entre les portions de mise en prise par raccordement (20b).

9. Système selon la revendication 8, **caractérisé en ce que** la paroi de rebord fait saillie vers le bas et transversalement à partir de la paroi de raccordement (20a).

10. Système selon la revendication 9, **caractérisé en ce que** la partie en arceau fait saillie à partir de la paroi de raccordement (20a).
